# EUROPEAN PATENT APPLICATION

(11) **EP 0 823 615 A2**
(43) Date of publication of application: **11.02.1998**
(21) Application number: 97113154.5
(22) Date of filing: 30.07.1997
(51) Int. Cl.: G01C 15/00

(54) **Light receiving point sensing device**

(30) Priority: 08.08.1996 JP 209984/96
(71) Applicant: Technical System Co., Ltd., Osaka-shi, Osaka 532 (JP)
(72) Inventor: Morimoto, Yasuaki, c/o Technical System Co., Ltd., Osaka-shi, Osaka 532 (JP)
(74) Representative: Gossel, Hans K., Dipl.-Ing.

(57) **Abstract**

Four pairs of right-angled-triangular solar cell panels 21a, 21b, ... are arranged in series along a longitudinal direction of a columnar device body in such a manner that two solar cell panels forming each pair are adjacent at their hypotenuses to each other, thereby forming a light-receiving part 2. Output signals corresponding to amounts of light reception of each pair of solar cell panels are inputted to corresponding operating unit 80. Each operating unit 80 operates a difference between an amount of light reception of one solar cell panel forming the pair and an amount of light reception of the other solar cell panel. Based on the difference, a microprocessor 84 detects a deviation of an actual light receiving point with respect to a reference light receiving point 2a. The microprocessor 84 numerically indicates the detected deviation on a liquid crystal indicating panel 3 and transfers the detected deviation to an external computer or the like through an I/O interface unit 9.

## Description

### Background of the Invention

This invention relates to a light receiving point sensing device for use in measurements of horizontal or vertical displacements of buildings or the like, leveling controls of earthmovers, land surveys by leveling and the like, and particularly relates to a light receiving point sensing device which receives a reference light beam and detects a position of an object to be measured relative to its light receiving point.

Conventionally, in leveling controls over blades of bulldozers and the like, a rotating laser for making a rotary scanning within a reference plane with the use of a laser light is placed and a reference laser light projected from the rotating laser is received by a light receiving point sensing device mounted on an earthmover such as a bulldozer. A blade of the bulldozer is controlled in position by using a light receiving point of the sensing device as a reference level.

As an example of light receiving point sensing devices of such kind, there is known a device using a batch of optical fibers, as disclosed in Japanese Patent Publication Gazette No. 3-18122. In this device, a laser light projected from the rotating laser is transferred from light-receptive surfaces arranged on the periphery of a cylindrical body of the device to a photoelectric conversion element inside the device body through the batch of optical fibers. The device is structured such that an area of the light-receptive surfaces and the number of optical fibers are gradually increased or decreased in a vertical direction. Under this structure, since an amount of light reception of the photoelectric conversion element changes with vertical shifts of the laser-light receiving point on the periphery of the device body, the laser-light receiving point can be detected based on the amount of light reception.

In the conventional light receiving point sensing device above-mentioned, however, the light-receptive surfaces are arranged discontinuously on the periphery of the device body so that the gradual change in area of the light-receptive surfaces is comparatively rough. In addition, the optical fibers cause attenuation of amounts of light and the like. Therefore, the above device provides an inconvenience that the detection of a light receiving point based on the amount of light reception cannot be enhanced in accuracy.

The present invention has been made in view of the above problem and has its object of improving the structure of a light-receiving part thereby providing an enhanced accuracy of detection of a light receiving point sensing device.

### Summary of the Invention

To attain the above object, the present invention is directed to a light receiving point sensing device having: light-receiving means which is placed on an object to be measured in the form of extending along a direction of locating the object and receives a reference light beam; and detecting means for detecting a deviation in the direction of locating the object of an actual light receiving point with respect to a reference light receiving point preset in the light-receiving means. The light-receiving means comprises a pair of photoelectric conversion panels composed of: a first photoelectric conversion panel having the form that an area of its light-receptive surface gradually increases from one side of the direction of locating the object toward the other side thereof; and a second photoelectric conversion panel which is placed at a position adjacent to the first photoelectric conversion panel in a direction orthogonal to the direction of locating the object and has the form that an area of its light-receptive surface gradually decreases from one side of the direction of locating the object toward the other side thereof. The detecting means detects a deviation of the actual light receiving point with respect to the reference light receiving point based on a signal outputted from the first photoelectric conversion panel and a signal outputted from the second photoelectric conversion panel.

Under the above structure, an amount of light received by the first photoelectric conversion panel and an amount of light received by the second photoelectric conversion panel each change with the shift of the actual light receiving point in the direction of locating the object to be measured. Accordingly, based on the changes in the amounts of light, the actual light receiving point can be detected with higher accuracy as compared with the conventional case. For example, when the actual light receiving point is shifted from one side in the direction of locating the object to the other side therein, the first photoelectric conversion panel gradually increases its amount of light reception with the shift of the light receiving point while the second photoelectric conversion panel gradually decreases its amount of light reception with the shift of the light receiving point. Then, based on signals outputted from the first and second photoelectric conversion panels respectively, a shift in the actual light receiving point is detected by the detecting means. At this time, even if an amount of change in each signal value corresponding to the shift in the actual light receiving point is comparatively small, each signal value can be subtracted or divided by the detecting means so that the operated amount of change in the signal value are sufficiently amplified. Accordingly, it becomes possible to detect a shift in the light receiving point with higher accuracy as compared with the conventional case. This provides an enhanced accuracy of detecting a light receiving point.

The light-receiving means preferably comprises at least two pairs of photoelectric conversion panels, the pairs are aligned along the direction of locating the object to be measured.

When the pairs of photoelectric conversion panels are aligned along the direction of locating the object to be measured, respective degrees of changes in light-receptive surface area of the respective photoelectric conversion panels can be set sufficiently large even if the light-receiving means is formed so as to have a long length in the direction of locating the object to be measured. This allows the light-receiving means to have a long length in the direction of locating the object without decreasing its accuracy of detecting a light receiving point. Accordingly, the reference light beam can be received comparatively with ease.

It is preferable that the pair of photoelectric conversion panels are each formed in a right-angled triangle and are placed to be adjacent at hypotenuses to each other.

Under the above structure, with the shift of a light receiving point in the direction of locating the object to be measured, a light-receptive surface area of one of adjacent two photoelectric conversion panels is sure to gradually increase while a light-receptive surface area of the other is sure to gradually decrease. In other words, output signals from the photoelectric conversion panels change in response to a deviation of the light receiving point from the reference light receiving point. Accordingly, detection of the light receiving point by the detecting means can be facilitated. Further, the photoelectric conversion panels can be arranged without wasting space.

The outline of the light-receptive surface of the photoelectric conversion panel is preferably formed through masking with the use of light-tight material.

Under the structure, the outline of the light-receptive surface of the photoelectric conversion panel can be formed in an arbitrary form with ease. This facilitates the formation of the light-receiving means.

The detecting means is preferably configured to detect a deviation of the actual light receiving point with respect to the reference light receiving point based on a subtraction between a signal outputted from the first photoelectric conversion panel and a signal outputted from the second photoelectric conversion panel.

Under the configuration, the detecting means can detect a deviation of the actual light receiving point with respect to the reference light receiving point based on a difference between an amount of light reception of the first photoelectric conversion panel and an amount of light reception of the second photoelectric conversion panel. Accordingly, even if a change in the amount of light reception of each photoelectric conversion panel due to a shift of the light receiving point is comparatively small, a change in the difference between the amounts of light reception of the first and second photoelectric conversion panels can be sufficiently large. This enables a high-accuracy detection of a change in light receiving point.

It is preferable that the light receiving point sensing device of the present invention further comprises: a reference point indicating line provided with respect to the reference light receiving point; a scale calibrated from the reference light receiving point toward both sides in the direction of locating an object to be measured; and indicating means for numerically indicating a deviation detected by the detecting means.

Under the above structure, when a light receiving point is marked on an object to be measured, a deviation of the light receiving point with respect to the reference light receiving point can be read with ease, and the marking can be made with ease according to the read value with reference to graduations of the scale. This eliminates the need for aligning the light receiving point sensing device with the reference light beam by moving the light receiving point sensing device thereby increasing workability, and eliminates a detection error due to the alignment thereby increasing detection accuracy.

It is preferable that the light receiving point sensing device of the invention further comprises communicating means for transmitting a deviation detected by the detecting means to external equipment.

Under the above structure, since a detected result can be transmitted to external equipment such as a computer, this eliminates the need for a measurer to read the detected result. Further, if the light receiving point sensing device is attached to a vibrating object to be measured to detect amplitudes of the object, amplitude measurements can be made with ease. Furthermore, since a detected result can be transmitted to an external memory for automatic storage, this makes it possible to store displacements of an object to be measured without human intervention for a long time.

### Brief Description of the Drawings

Fig. 1 is a front view showing the structure of a light beam sensor according to an embodiment of the present invention.

Fig. 2 is a block diagram showing the structure of a detecting means.

Fig. 3 is a diagram showing the structure of a photoelectric conversion panel according to another embodiment of the invention.

Fig. 4 is a schematic diagram showing the principle of detection of a light receiving point.

Fig. 5 is a diagram showing an application of a light receiving point sensing device of the invention to an electronic level rod.

### Description of the Preferred Embodiments

Description will be made below about embodiments of the present invention with reference to the drawings.

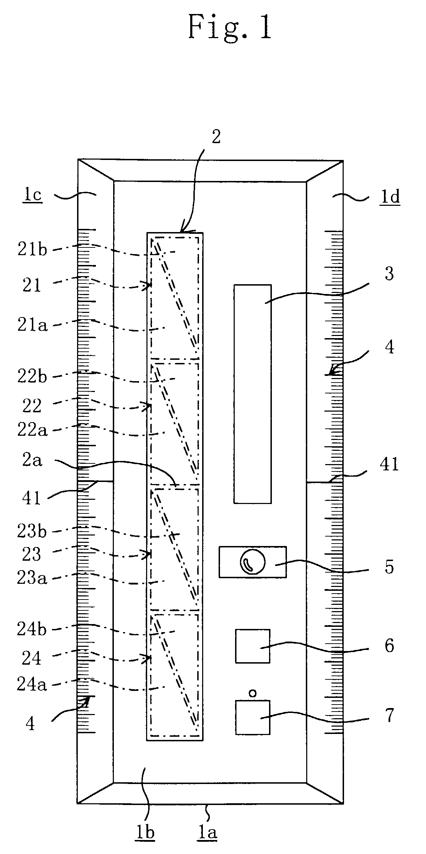

Fig. 1 shows an application of a light receiving point sensing device of the present invention to a light beam sensor 100 used for land surveys by leveling and the like. In the figure, reference numeral 1 denotes a resin-made device body formed in a column, reference numeral 2 denotes a light-receiving part as a light-receiving means for receiving a laser light projected from an unshown rotating laser, and reference numeral 3 denotes an indicating part for numerically indicating a deviation between a reference light receiving point 2a preset in the light-receiving part 2 and an actual light receiving point of the laser light. Reference numeral 4 denotes a scale serving as an index for marking an object surface to be measured, reference numeral 5 denotes a bubble tube for indicating the degree of tilt of the device body 1 with respect to a perpendicular direction, reference numeral 6 denotes a reset switch for resetting the indicated value on the indicating part 3 to "0", and reference numeral 7 denotes an operating switch of the light beam sensor 100.

The device body 1 has a horizontally sectional form of a trapezoid and forms a surface corresponding to the lower base of the trapezoid (back surface in the figure) into a reference surface 1a to be made contact with an object surface to be measured. The light-receiving part 2, the indicating part 3 and the like are placed on a first surface 1b (front surface in the figure) opposite to the reference surface 1a. The scales 4, 4 are provided on a second surface 1c and a third surface 1d which correspond to both the hypotenuses of the trapezoid, respectively.

The light-receiving part 2 is placed on the first surface 1b of the device body 1 so as to extend in a longitudinal direction (a vertical direction in Fig. 1: hereinafter, referred to as a vertical direction) and has the reference light receiving point 2a set at its central position in the vertical direction. The light-receiving part 2 is composed of a plurality of solar cell panels (photoelectric conversion panels) 21a, 21b, 22a, 22b, ... each having the same form of a right-angled triangle. The solar cell panels 21a, 21b, 22a, 22b, ... are arranged such that each two forming a pair out of them are placed side by side in a relation adjacent at their hypotenuses to each other. Four pairs of solar cell panels in total are arranged such that two pairs of solar cell panels are arranged on each of upper and lower sides from the reference light receiving point 2a. Each of the solar cell panels 21a, 21b, ... outputs an electric signal corresponding to its amount of light reception.

The indicating part 3 is a liquid crystal display panel having a backlight and numerically indicates a vertical deviation between an actual light receiving point on the light-receiving part 2 and the reference light receiving point 2a with high accuracy (for example, in tenths of one millimeter). The scales 4, 4 are formed on the second and third surfaces 1c, 1d of the device body 1 respectively so as to extend in parallel with the light receiving part 2 and indicate in millimeters upward and downward distances from respective reference point indicating lines 41, 41 marked on the right and left sides of the reference light receiving point 2a of the light-receiving part 2.

The bubble tube 5 encapsulates a small amount of air in a transparent capsule together with a liquid such as alcohol and is for observing the air in a bubble form. The air bubble moves in the transparent capsule according to a tilt of the device body 1, thereby indicating the degree of tilt of the device body 1.

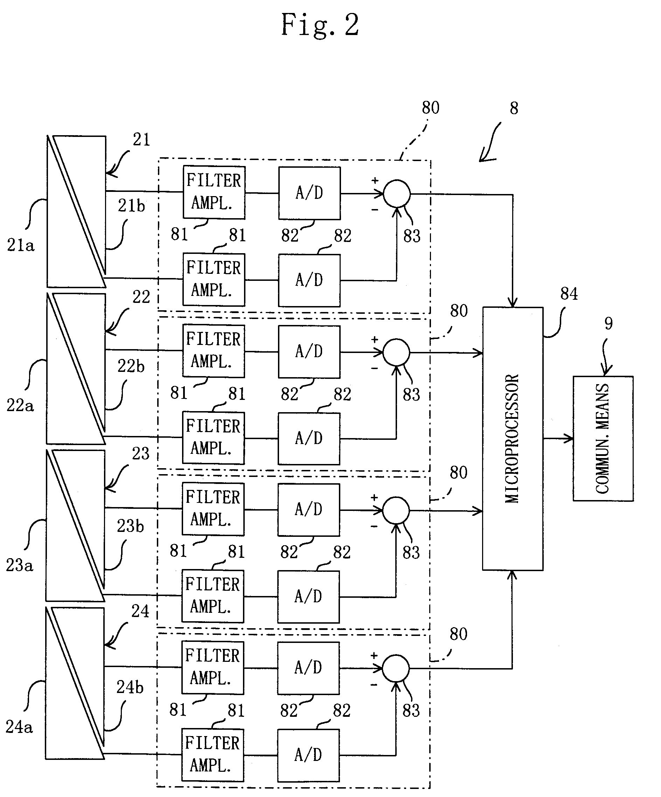

Fig. 2 shows a detecting means 2 for detecting a vertical deviation between an actual light receiving point and the reference light receiving point 2a based on input signals from the light-receiving part 2. In the figure, reference numerals 80, 80, ... denote respective operating units provided in correspondence to respective pairs 21, 22, ... of solar cell panels, reference numerals 81, 81, ... denote filter amplifiers which are contained in the operating units 80, 80, ... and input signals from the solar cell panels 21a, 21b, ... respectively, reference numerals 82, 82, ... denote A/D converters which are contained in the operating units, and reference numerals 83, 83, ... denote subtracters which are contained in the operating units. Reference numeral 84 denotes a microprocessor for receiving signals from the operating units 80, 80, ..., and reference numeral 9 denotes an I/O interface unit as a communicating means.

The operating units 80, 80, ... each output a signal corresponding to a difference between amounts of light reception of the first solar cell panel 21a, 22a, ... (left side in Fig. 2) and the second solar cell panel 21b, 22b, ... (right side in Fig. 2) of the corresponding pair 21, 22, ... of solar cell panels to the microprocessor 84. The microprocessor 84 detects a vertical deviation between an actual light receiving point and the reference light receiving point 2a on the light receiving part 2 based on the input signals.

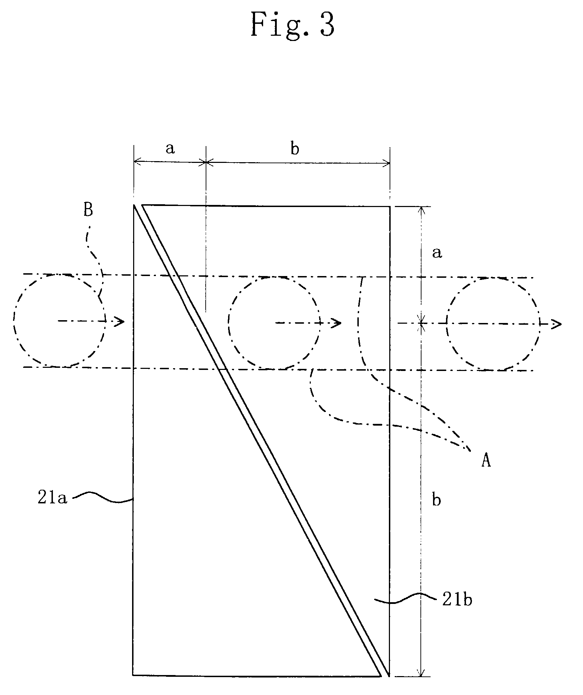

For example, as shown in an imaginary line A in Fig. 3, when a beam spot B of a laser light projected from the rotating laser horizontally passes through the pair 21 of solar cell panels along a line divided at a ratio of a:b from the panel top ends so as to traverse from left to right, a ratio of amounts of light reception received by left and right panels 21a, 21b forming the pair 21 is a:b. Electric signal (Ia, Ib) proportional to the corresponding amounts of light reception are outputted from the solar cell panels 21a, 21b and are then amplified by the filter amplifiers 81, 81, respectively. The amplified electric signals are converted into digital signals by the A/D converters 82, 82 respectively and are then subtracted through the subtracter 83. The subtracted result (Ia - Ib) is inputted to the microprocessor 84. The microprocessor 84 accurately locates a vertical light receiving point thereby accurately detecting a deviation between the light receiving point and the reference light receiving point 2a.

The deviation, detected in the above manner, between the light receiving point and the reference light receiving point 2a is numerically indicated on the indicating part 3 and is transferred from the I/O interface unit 9 to external equipment, such as a personal computer and a memory, connected to the light beam sensor 100, through an unshown communication cable.

Next, description is made about a method of using the light beam sensor 100 of the above embodiment for land surveys by leveling and about operations and effects of the light beam sensor 100 used in the method.

First, a measurer pushes the operating switch 7 to put the light beam sensor 100 into an operating mode, and moves the device body 1 up and down with the reference surface 1a made contact with an object surface to be measured while keeping the device body 1 in a vertical position, thereby allowing the light beam sensor 100 to receive a reference laser light projected to the rotating laser. Briefly, the measurer moves the device body 1 up and down until the indicating part 3 provides a numeric indication. Then, the measurer slightly rotates the device body 1 around the reference light receiving point 2a with reference to the position of an air bubble in the bubble tube 5 to correctly orient it in a perpendicular direction.

In this state, while keeping the device body 1 pushed on the object surface to be measured, the measurer marks points on the object surface which are distant by the indicated value on the indicating part 3 from the reference spot indicating lines 41, 41 in accordance with graduations of the scale 4. In this manner, the reference level point can be correctly marked on the object surface to be measured.

Accordingly, since the light beam sensor 100 of the present embodiment detects a deviation between an actual light receiving point and the reference light receiving point 2a based on electric signals outputted from both solar cell panels 21a, 21b, ... forming each pair 21, 22, ... of solar cell panels, the light receiving point can be detected with higher accuracy as compared with the conventional case. This provides an enhanced accuracy of marking on an object surface to be measured.

Further, since the light receiving part 2 is formed to have a comparatively large length by using four pairs 21, 22, ... of solar cell panels arranged in the form of extending along the longitudinal direction of the device body 1, a light-receptive range having a sufficient length in the direction of locating an object to be measured can be secured. This allows ease reception of light projected from the rotating laser thereby increasing workability.

Furthermore, since a deviation between an actual light receiving point and the reference light receiving point 2a is numerically indicated on the indicating part 3 of the light beam sensor 100, there is no need for correctly aligning the reference light receiving point 2a with the reference level through the movement of the light beam sensor 100. This increases workability and eliminates a detection error due to the above-mentioned alignment, thereby providing further enhancement in detection accuracy.

### 〈Other Embodiments〉

The present invention is not limited to the above embodiment and includes various kinds of other embodiments. In the above embodiment, the solar cell panels 21a, 21b, ... are each formed in a right-angled triangle. However, the solar cell panel may have the form that an area of its light-receptive surface changes non-linearly along a secondary curve or the like. In this case, the microprocessor 84 may be configured to perform signal processing in response to non-linear change in area of the light-receptive surface.

In the above embodiment, four pairs 21, 22, ... of solar cell panels are aligned, on the device body 1, along the longitudinal direction of the device body 1. However, no limit is placed on the number of pairs of solar cell panels.

In the above embodiment, based on a difference between both amounts of light reception of the left side solar cell 21a, 22a, ... and the right side solar cell 21b, 22b ..., a light receiving point is detected. However, a light receiving point may be detected based on a ratio of amounts of light reception between the right and left solar cell panels 21a, 21b, ..., obtained by dividing values of electric signals outputted from the right and left solar cell panels 21a, 21b, ... in each pair by each other.

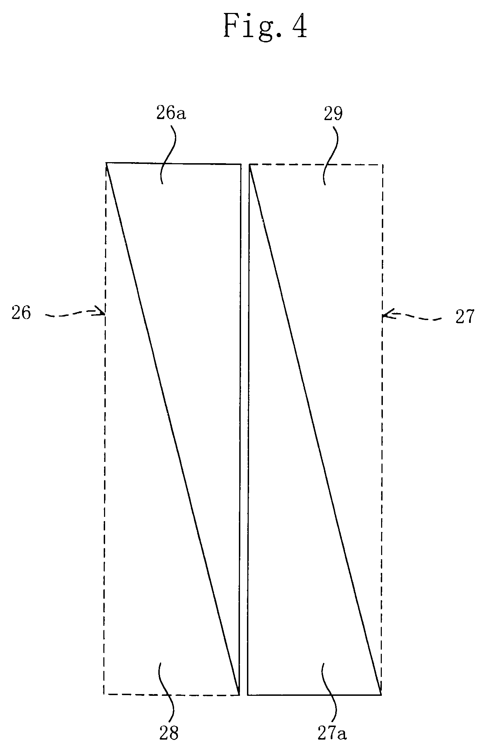

In the above embodiment, the light-receptive surface of the solar cell panel is formed in a right-angled triangle. For example, as shown in Fig. 4, rectangular light-receptive surfaces of the solar cell panels 26, 27 may be formed into triangular light-receptive surfaces 26a, 27a through masking by using light-tight resin films 28, 29 or the like.

The above embodiment is an application of a light receiving point sensing device of the invention to the light beam sensor 100 for use in land surveys by leveling and the like. However, a light receiving point sensing device of the invention is not limited to the above-mentioned application. For example, the present invention is applicable to measurements of distortions of buildings, measurements of horizontal and vertical displacements in the installations of mechanical apparatus and gradient measurements in the constructions of foundations for buildings.

A light receiving point sensing device of the present invention may be mounted on a bulldozer or the like for the purpose of leveling control of its blade. In this case, a result detected by the light receiving point sensing device is transferred to a control unit for blade control through the I/O interface unit 9 and a communication cable.

A light receiving point sensing device of the present invention may be applied to vibration measurements on large structures such as bridges. In this case, a light receiving point sensing device is placed on a bridge or the like, detected results are transferred, through the I/O interface unit 9, to magnetic recording media or the like for automatic data storage, and a laser light the intensity of which is modulated at a frequency higher than that of the bridge or the like is used.

A light receiving point sensing device of the present invention is also applicable to long-term displacement measurements as in the case of measurements of land subsidence. Also in this case, results detected by the light receiving point sensing device are transferred, through the I/O interface unit 9, to magnetic recording media or the like for automatic data storage.

In the above embodiment, results detected by the light receiving point sensing device are transferred to the outside through a dedicated communication cable. The detected results can be transferred to a distant point by telephone line through the use of a modem or the like.

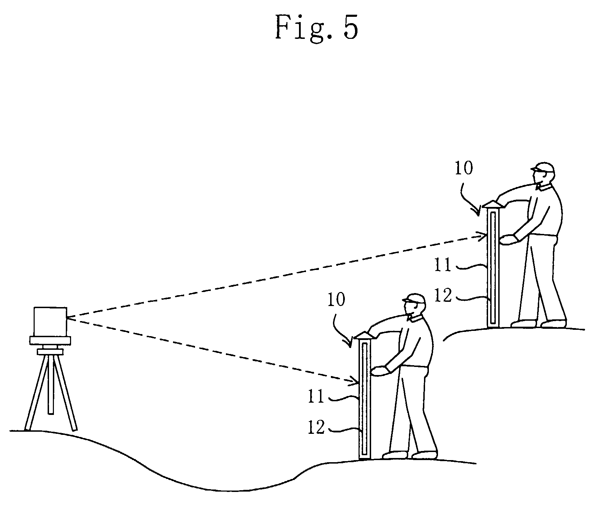

In the above embodiment, the light receiving point sensing device is applied to the light beam sensor 100. However, a light receiving point sensing device of the present invention may be applied to electronic level rods 10, 10 as shown in Fig. 5. In this case, a device body 11 is formed to have a sufficiently large length (about 1m to 2m, for example) and a light-receiving part 12 is also formed to have a sufficiently large length. The light-receiving part 12 may be composed of a large number of pairs of solar cell panels dependent on an accuracy of detection. Through the use of such electronic level rods 10, 10, projections, depressions and tilts of the ground can be measured with ease.

## Claims

1. A light receiving point sensing device having: light-receiving means which is placed on an object to be measured in the form of extending along a direction of locating the object and receives a reference light beam; and detecting means for detecting a deviation in the direction of locating the object of an actual light receiving point with respect to a reference light receiving point preset in the light-receiving means, wherein
the light-receiving means comprises a pair of photoelectric conversion panels composed of: a first photoelectric conversion panel having the form that an area of its light-receptive surface gradually increases from one side of the direction of locating the object toward the other side thereof; and a second photoelectric conversion panel which is placed at a position adjacent to the first photoelectric conversion panel in a direction orthogonal to the direction of locating the object and has the form that an area of its light-receptive surface gradually decreases from one side of the direction of locating the object toward the other side thereof and, and
the detecting means is adapted to detect a deviation of the actual light receiving point with respect to the reference light receiving point based on a signal outputted from the first photoelectric conversion panel and a signal outputted from the second photoelectric conversion panel.

2. A light receiving point sensing device according to claim 1, wherein the light-receiving means comprises at least two pairs of photoelectric conversion panels, said pairs are aligned along the direction of locating the object to be measured.

3. A light receiving point sensing device according to claim 1, wherein the pair of photoelectric conversion panels are each formed in a right-angled triangle and are placed to be adjacent at hypotenuses to each other.

4. A light receiving point sensing device according to claim 1, wherein the outline of the light-receptive surface of the photoelectric conversion panel is formed through masking with the use of light-tight material.

5. A light receiving point sensing device according to claim 1, wherein the detecting means is configured to detect a deviation of the actual light receiving point with respect to the reference light receiving point based on a subtraction between a signal outputted from the first photoelectric conversion panel and a signal outputted from the second photoelectric conversion panel.

6. A light receiving point sensing device according to claim 1, further comprising:
a reference point indicating line provided with respect to the reference light receiving point;
a scale calibrated from the reference light receiving point toward both sides in the direction of locating an object to be measured; and
indicating means for numerically indicating a deviation detected by the detecting means.

7. A light receiving point sensing device according to claim 1, further comprising communicating means for transmitting a deviation detected by the detecting means to external equipment.
